# EUROPÄISCHE PATENTSCHRIFT

(11) **EP 3 511 697 B1**
(45) Veröffentlichungstag und Bekanntmachung des Hinweises auf die Patenterteilung: **12.07.2023**
(21) Anmeldenummer: 18151391.2
(22) Anmeldetag: 12.01.2018
(51) Int. Cl.: G01N 21/3504, G01N 21/27, G01N 21/31

(54) **ANORDNUNG UND VERFAHREN ZUR ANALYSE EINES FLUIDS**
ASSEMBLY AND METHOD FOR ANALYSING A FLUID
DISPOSITIF ET PROCÉDÉ D'ANALYSE D'UN FLUIDE

(43) Veröffentlichungstag der Anmeldung: 17.07.2019
(73) Patentinhaber: Drägerwerk AG & Co. KGaA, 23558 Lübeck (DE); Fraunhofer-Gesellschaft zur Förderung der angewandten Forschung e.V., 80686 München (DE)
(72) Erfinder: Peter, Gerd, 23562 Lübeck (DE); Ferstl, Margit, 10555 Berlin (DE)
(74) Vertreter: 2SPL Patentanwälte PartG mbB

(56) Entgegenhaltungen:
- EP-A1- 0 591 758
- EP-B1- 0 770 219
- WO-A1-00/70330
- WO-A1-2017/001566
- DE-A1-102012 007 561
- US-A1- 2002 036 266
- US-A1- 2005 173 635
- US-A1- 2013 075 614
- US-B1- 6 955 652
- US-B2- 7 339 668

## Beschreibung

Ausführungsbeispiele beziehen sich auf eine Anordnung und ein Verfahren zur Analyse eines Fluids, insbesondere aber nicht ausschließlich, auf ein Konzept zur Analyse eines Fluids, das eine räumliche Durchmischung und Aufteilung eines von dem Fluid beeinflussten optischen Signals vorsieht.

Aus dem Bereich der konventionellen Technik sind Messkonzepte bekannt, die Gase mittels Spektroskopie vermessen. Beispielsweise offenbart die Druckschrift DE10315864 B4 eine übliche Messanordnung. Diese Anordnung dient der Konzentrationsbestimmung mehrerer Gaskomponenten in einem Atemgasgemisch. In dieser Anordnung wird das Licht einer (breitbandigen) Lichtquelle vor dem Durchgang durch eine Flusszelle/Küvette mithilfe eines optischen Elementes gebündelt, durchleuchtet nachfolgend eine Messzelle und wird dann nach einer Strahlteilung oder mehreren Strahlteilungen auf mindestens zwei Empfänger (ein Referenzsignal und mindestens ein Messsignal) aufgeteilt. Vor den Empfängern ist dabei ein entsprechendes Filterelement angeordnet, so dass nur der gewünschte Wellenlängenanteil des Lichtes von dem entsprechenden Detektor erfasst wird.

Eine ähnliche Anordnung für die Atemgasanalyse ist aus der WO00/70330 A1 bekannt. Auch bei dieser Anordnung wird Licht einer breitbandigen Lichtquelle vor einem Durchgang durch eine Flusszelle/Kapillare mithilfe eines optischen Elementes gebündelt, durchläuft die Messzelle und wird dann direkt auf ein Array (Feldanordnung) von Empfängern geleitet. Auch hier ist vor den Empfängern jeweils ein entsprechendes Filterelement angeordnet, so dass nur ein gewünschter Wellenlängenanteil des Lichtes von einem entsprechenden Sensorelement erfasst wird.

Eine weitere Mess-Anordnung ist aus der Druckschrift EP 1 842 040 B1 bekannt. Bei dieser Mess-Anordnung wird das Licht einer (breitbandigen oder mehrere Wellenlängen enthaltenden) Lichtquelle nach dem Durchleuchten eines Messobjektes mittels eines diffraktiven optischen Elementes auf einen Empfänger fokussiert. Das diffraktive Element ist dabei in Form einer Fresnellinse ausgeführt. Bei dieser Anordnung können auch mehrere Fresnellinsen gleichzeitig in einem zweidimensionalen Array angeordnet sein, wobei jede Linse der Anordnung dazu ausgelegt ist, eine bestimmte Wellenlänge auf einen dafür vorgesehenen Detektor zu fokussieren. In dieser Anordnung ist kein zusätzliches Filterelement vor jedem Empfängerelement vorgesehen, da jede Linse jeweils derart ausgelegt ist, dass sie nur Strahlung einer bestimmten Wellenlänge jeweils auf ein bestimmtes Empfängerelement fokussiert.

Eine direkte wellenlängenabhängige Strahlaufteilung hinter einer Durchflusszelle/Küvette ist ebenfalls aus dem Stand der Technik bekannt, vgl. Dokument DE10 2005 002 106 B3. Dabei wird mit Hilfe eines diffraktiven Phasenelementes das Messlicht ganz wie in der Spektroskopie üblich auf verschiedene Wellenlängen aufgeteilt. Durch das gleichzeitige Vorsehen eines refraktiven und fokussierenden Elementes wird das Messlicht auf einzelne Sensorelemente/Empfänger in einem Array gelenkt.

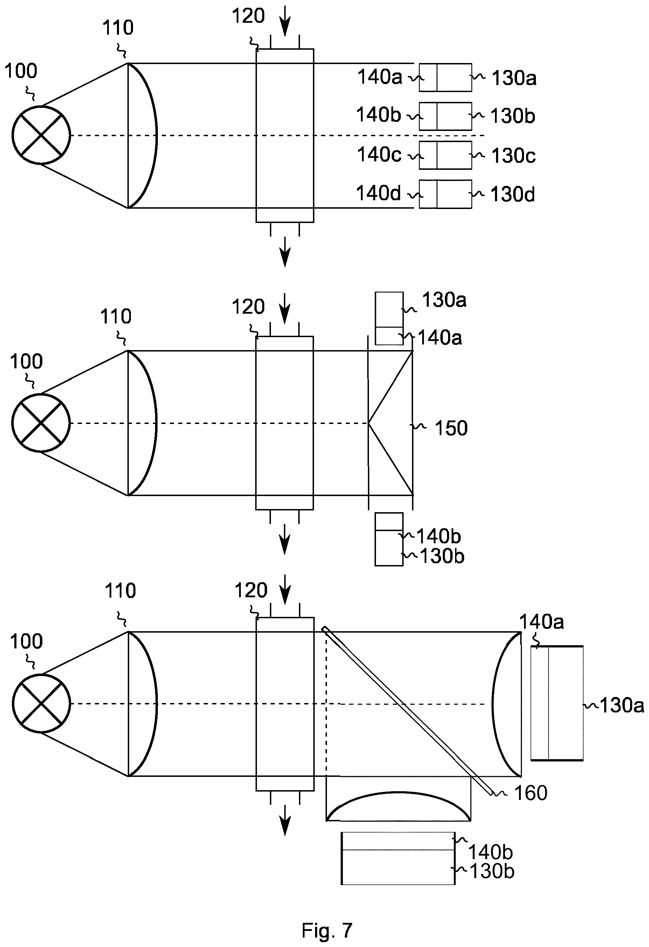

Fig. 7 zeigt verschiedene bekannte Messaufbauten, mit je einer Lichtquelle 100, einer Optik 110 und einer Küvette oder Durchflusszelle 120. Das Messlicht wird dann nach Durchlaufen von Filterelementen 140 a-d mit Empfängereinheiten 130a, 130b, 130c, 130d gemessen. Die Fig. 7 zeigt oben einen Messaufbau aus dem Stand der Technik, beispielsweise wie ihn auch das Dokument WO00/70330 A1 offenbart. Das von einer Lichtquelle 100 ausgehende Licht wird mittels einer geeigneten Optik 110 kollimiert und durchleuchtet eine Durchflusszelle/Küvette 120. Das Messlicht fällt dann auf eine Empfängereinheit mit mehreren Empfängerelementen 130a-d, und vorgeschalteten Filterelementen 140a-d. Die Fig. 7 zeigt in der Mitte einen Aufbau mit einem Prismenelement 150, das das Messlicht auf die beiden Lichtempfänger 130a, b über die beiden Filterelemente 140a,b leitet. In der Fig. 7 unten wird ein Strahlteiler (z.B. dichroitischer Strahlteiler) verwendet, um das Messlicht auf die beiden Lichtempfänger aufzuteilen.

Bei vielen dieser Aufbauten kann es vorkommen, dass z.B. Verschmutzungen und/oder Kondensate, die an den Wänden bzw. Fenstern der Durchflusszelle 120 auftreten können, im durchstrahlten Bereich der Durchflusszelle 120 liegen und dabei die Intensität eines Teilbündels des Messstrahls abschwächen. Durch die Aufteilung des Messstrahls in Teilbündel ist es bei geeigneter Auswahl wellenselektiver Filterelemente jedoch möglich, einen Messfehler durch die Schwächung des Lichts aufgrund dieser Verschmutzungen zu korrigieren. Dazu wird das Messfilter einer Empfängereinheit so ausgewählt, dass das entsprechende Teilbündel keine spektrale Schwächung durch das Mess-Gas in der Durchflusszelle erfährt, gleichwohl aber die Empfängereinheit die Variation der Lichtintensität durch Verschmutzungseffekte erfasst. Durch die Normierung der übrigen Messkanäle auf diese Referenz lassen sich falsch zu groß gemessene Gaskonzentrationen korrigieren. Ähnliche Effekte können durch lokale Schwankungen oder Unterschiede in der Konzentration des Fluids in der Durchflusszelle hervorgerufen werden.

Falls die Störung jedoch nur lokal auftritt, sind auch nur die Empfängerelemente betroffen, auf die das entsprechende Teilbündel einfällt. In diesem Fall verbleibt ein Messfehler, da sich Mess- und Referenzstrahlen aufgrund der lokalen Abschattungen nicht gleichartig ändern. Ein solches Problem kann auch bei der Verwendung von räumlich selektiven Strahlteilern auftreten, wie in der mittleren Abbildung von Fig. 7 gezeigt. Beispielsweise kann ein verspiegeltes Prismenelement 150 zur Aufteilung in ein oberes und ein unteres Strahlteilbündel verwendet werden. Z.B. kann das obere Strahlbündel von einer lokalen Störung betroffen sein und das untere Strahlteilbündel nicht, was zu einer lokalen Verfälschung der Messdaten führen kann. Das gleiche Problem kann sich auch für das in der Schrift EP 1 842 040 A1 beschriebene Fresnellinsenelement oder das refraktive Linsenarray der DE 10 2005 002 106 B3 ergeben.

Der in Abbildung in der Fig. 7 unten gezeigte Messaufbau verwendet einen räumlich nicht selektiven Strahlteiler 160 (bspw. ein dichroitischer Strahlteiler). Wenn eine Vielzahl von Messsensoren/Empfängern (bspw. für mehrere Absorptionslinien eines oder mehrerer Gase und einer Referenzwellenlänge) erforderlich sind, muss pro zusätzlichem Empfängerelement jeweils ein weiteres Strahlteilerelement verwendet werden. Das kann zu zusätzlichen Verlusten und zu einem aufwändigen und wenig kompakten Aufbau führen.

Die Druckschrift US 7 339 668 B2 beschreibt ein Spektrometer, das Lichtfasern zur Aufteilung eines flächig erfassten Lichtsignals verwendet. Das Dokument US 2013/075614 A1 beschreibt ein Konzept zur Detektion von Analyten in einer Lösung. Die Druckschrift EP 0 591 758 A1 beschreibt ein Analysegerät zur gleichzeitigen Bestimmung von mehreren Gasen oder Flüssigkeiten basierend auf der Absorptionsspektroskopie. Das Dokument US 6 955 652 B1 offenbart einen mit Infrarotlicht arbeitenden Gasdetektor. Die Druckschrift WO 00/70330 A1 beschreibt einen Detektor für Anästhesiemittel. Das Dokument US 2005/173635 A1 offenbart Gasdetektion mit zumindest zwei analytischen Detektoren. Die Druckschrift DE 10 2012 007561 A1 beschreibt ein Gasdetektorsystem mit einem Analysedetektor und einem Referenzdetektor.

Das Dokument WO 2017/001566 A1 beschreibt eine Vorrichtung zum Messen einer optischen Absorptionseigenschaft eines Fluids als Funktion der Wellenlänge. Die Vorrichtung umfasst eine breitbandige Lichtquelle zum Aussenden von Licht, mehrere integrierte Lichtwellenleiter zur Führung dieses Lichts und einen Lichtkoppler zum Einkoppeln des emittierten Lichts in die integrierten Lichtwellenleiter derart, dass das in jeden integrierten Lichtwellenleiter eingekoppelte Licht im Wesentlichen die gleiche spektrale Verteilung aufweist.

Die Druckschrift US 2002/036266 A1 offenbart einen optischen Infrarot-Gasanalysator mit einer Infrarot-Strahlungsquelle, zwei Multispektraldetektoren und einer Küvette mit dem zu messenden Gasgemisch. Ein Verfahren zur Bestimmung von Gaskonzentrationen mit dem optischen Infrarot-Gasanalysator wird ebenfalls bereitgestellt. Der Gasanalysator ermöglicht die gleichzeitige Messung und Identifizierung mehrerer Gase in einem Gasgemisch.

Das Dokument EP 0 770 219 A1 beschreibt ein Verfahren und eine Vorrichtung zum Bestimmen eines Zustands eines Objekts basierend auf einer quasi-elastischen Wechselwirkung zwischen dem Objekt und auf das Objekt übertragenem Licht. Das Licht wird von einer Lichtquelle durch mindestens ein diffraktives optisches Element übertragen.

Es besteht daher ein Bedarf ein verbessertes Konzept zur Analyse eines Fluids zu schaffen. Diesem Bedarf werden Ausführungsbeispiele einer Anordnung und eines Verfahrens gemäß den anhängigen unabhängigen Ansprüchen gerecht.

Ausführungsbeispiele basieren auf der Erkenntnis, dass eventuell vorhandene Verschmutzungen/Anhaftungen (wie Kondensate) an den zu durchstrahlenden Wänden einer Durchflusszelle/ Kapillare oder andere Störungen wie z.B. Streuung an Tröpfchen oder Partikeln oder lokal auftretende Durchflussschwankungen, die im Strahlengang des Messlichtes liegen, zu einer lokalen Verfälschung der Messdaten führen, d.h. bestimmte räumliche Anteile des die Durchflusszelle durchsetzenden Messlichtes sind von der Störung betroffen, andere jedoch nicht. Ausführungsbeispiele basierend daher auf dem Kerngedanken das Messlicht räumlich zu durchmischen, um den Einfluss solcher Störungen oder Verschmutzungen gleichmäßig zu vermischen und zu verteilen und so eine Art räumlichen Ausgleich oder räumliche Ausmittelung der Störeinflüsse zu erreichen. Solche Störeinflüsse können in Durchflusszellen/Küvetten beispielsweise auch auf lokale Druck und/oder Konzentrationsschwankungen zurückgehen.

Ausführungsbeispiele basieren ferner auf der Erkenntnis, dass dabei je nach Art eines strahlaufteilenden Elementes besondere Effekte auftreten können. Strahlteiler (wie die oben erwähnte zweidimensionale Anordnung von Fresnellinsen, jede andere einfache-Linsenarrayanordnung, aber auch verspiegelte Prismen, oder eine simple Empfängerarray-Anordnung), die unterschiedliche Teilbereiche eines einfallenden Lichtstrahles auf unterschiedliche optische Wege leiten, sind direkt von den räumlich lokalen, oben erwähnten Störungen im Messlicht, das die Probe durchstrahlt hat, betroffen. Einzelne Sensorelemente (die jeweils einer Absorptionslinie eines Gases oder einer Referenzmessung zugeordnet sind) sind von einer lokalen Störung in der Durchflusszelle/Kapillare betroffen, andere nicht. Bei üblichen wellenlängenselektiven Strahlteilern (z.B. dielektrischen/ dichroitischen Strahlteilern) oder einfachen teilreflektierenden Spiegelstrahlteilern müssen, wenn mehrere Sensorelemente mit demselben Messlicht beaufschlagt werden sollen, Strahlteiler-Elemente hintereinander angeordnet werden, was einerseits zu erhöhten Messlichtverlusten und andererseits zu einem sehr komplexen und wenig kompakten Aufbau (insbesondere für Messanordnungen, die im Infraroten arbeiten) führt. Bei Anordnungen mit Strahlteilern kann die Anordnung von Strahlteiler und Detektor nicht hintereinander stapelförmig erfolgen, sondern unter größeren Winkeln zur optischen Achse. Dies kann zu einem hohen Aufwand in der Aufbau- und Verbindungstechnik führen.

Ausführungsbeispiele schaffen eine Anordnung oder eine Messweise, die unabhängig von lokalen Verschmutzungen/Störungen im Strahlengang ist, die auch bei lokalen Schwankungen im Gas-/Dampfgemisch in der Durchflusszelle/Küvette Fehlmessungen verhindert, die insgesamt wenig Verluste aufweist und die kompakt aufgebaut werden kann. Ausführungsbeispiele schaffen eine Anordnung zur Analyse eines Fluids. Die Anordnung umfasst eine Strahlteiler- und Mischeroptik, die ausgebildet ist, um ein optisches Signal räumlich zu durchmischen und in zumindest zwei räumliche Teilbündel aufzuteilen. Die Strahlteiler- und Mischeroptik umfasst ein diffraktives optisches Element, das ausgebildet ist, um das optische Signal räumlich zu durchmischen und um eine 1 auf n Strahlteilung in n Teilbündel für n Messfelder vorzunehmen, wobei n eine natürliche Zahl größer als 1 ist.

Die Anordnung umfasst ferner eine Durchflusszelle, die ausgebildet ist, um Mittels einer Probe des Fluids zumindest die zwei räumlichen Teilbündel spektral zu beeinflussen. Dabei wird die Durchflusszelle von jedem der zumindest zwei räumlichen Teilbündel im Wesentlichen vollständig durchleuchtet. Darüber hinaus umfasst die Anordnung eine Messeinrichtung mit n Messfeldern, die ausgebildet ist, um die zumindest zwei räumlich getrennten Teilbündel zu vermessen.

Ausführungsbeispiele schaffen darüber hinaus ein Verfahren zur Analyse eines Fluids. Das Verfahren umfasst ein räumliches Durchmischen und Aufteilen eines optischen Signals in zumindest zwei räumliche Teilbündel. Die Strahlteiler- und Mischeroptik umfasst ein diffraktives optisches Element, das ausgebildet ist, um das optische Signal räumlich zu durchmischen und um eine 1 auf n Strahlteilung in n Teilbündel für n Messfelder vorzunehmen, wobei n eine natürliche Zahl größer als 1 ist.

Das Verfahren umfasst ein Beeinflussen der zumindest zwei räumlichen Teilbündel mit einer Probe des Fluids, wobei die Probe von jedem der zumindest zwei räumlichen Teilbündel im Wesentlichen vollständig durchleuchtet wird, und ein Vermessen der zumindest zwei räumlichen Teilbündel. Durch das räumliche Durchmischen können Störungseinflüsse (idealer Weise gleichmäßig) räumlich verteilt werden und den gleichen Einfluss auf die Teilbündel nehmen. Dadurch kann ein gleicher relativer Einfluss der Störung in den Teilbündeln erreicht werden.

In manchen Ausführungsbeispielen kann die Strahlteiler- und Mischeroptik in Ausbreitungsrichtung des optischen Signals vor der Durchflusszelle angeordnet sein, um die Probe des Fluids mit den zumindest zwei räumlichen Teilbündeln zu durchleuchten. In anderen Ausführungsbeispielen kann die Strahlteiler- und Mischeroptik in Ausbreitungsrichtung des optischen Signals hinter der Durchflusszelle angeordnet sein, um die Probe des Fluids mit dem optischen Signal zu durchleuchten. Ausführungsbeispiele können somit hinsichtlich der Anordnung Flexibilität bieten. Beispielsweise kann die zu untersuchende Probe mit einem optischen Signal durchleuchtet und das so von der Probe beeinflusste optische Signal kann dann durchmischt und aufgeteilt werden. In manchen Ausführungsbeispielen kann auch zunächst durchmischt und aufgeteilt werden und dann die Probe mit den Teilbündeln durchleuchtet werden, um die Teilbündel dann entsprechend zu beeinflussen. In einigen weiteren Ausführungsbeispielen kann die Anordnung zur Analyse eines gas- oder dampfförmigen Fluids ausgebildet sein. Ausführungsbeispiele können so beispielsweise bei der Atemgasanalyse eingesetzt werden. Die Anordnung kann ferner zumindest eine thermische Lichtquelle zur Erzeugung des optischen Signals zur Durchleuchtung der Durchflusszelle aufweisen und so kompakt bereitgestellt werden. In Ausführungsbeispielen kann die Messeinrichtung eine Lichtempfangseinheit mit zumindest zwei Lichtempfängern mit jeweils vorgeschalteten und zugehörigen Filtern oder Filterelementen aufweisen, so dass zumindest in machen Ausführungsbeispielen direkt elektrische Messsignale oder Messwerte ausgegeben werden können. Die Strahlteiler- und Mischeroptik umfasst ein diffraktives optisches Element, insbesondere ein computergeneriertes Hologramm (CGH). Das Durchmischen und Aufteilen kann somit durch ein einziges Bauteil realisiert sein. Das diffraktive optische Element/CGH ist ausgebildet, um eine 1 auf n Strahlteilung in n Teilstrahlen für n Messfelder vorzunehmen, wobei n eine natürliche Zahl größer als 1 ist. Insofern können auch mehr als zwei Teilbündel gebildet werden und somit mehr Messungen ermöglicht werden, beispielsweise mehrere spektrale Anteile oder Absorptionen untersucht werden. Das diffraktive optische Element kann ausgebildet sein, um als 1 auf n (z.B. 4) Strahlteiler /Mischer eine Aufteilung in zumindest 4 Quadranten vorzunehmen.

Manche Ausführungsbeispiele nutzen auf einen Referenzstrahl oder eine Referenzmessung normierte Messergebnisse (das geschieht i.A. dadurch, dass einer der Teilstrahlen als Referenzstrahl zur Normierung genutzt wird). Die Strahlteiler- und Mischeroptik kann dabei so ausgebildet sein, dass sie ein zentrales Strahlungsbündel erzeugt, das als Referenz für die anderen Strahlungsbündel nutzbar ist. Die Anordnung der Empfangselemente kann ferner auf die Referenz angepasst derart ausgebildet sein, das zentrale Strahlungsbündel (d.h. den ungebeugt durchgehenden Strahl, der üblicherweise mehr oder weniger stark auftritt) als Referenz für die anderen Strahlungsbündel zu nutzen. Durch Verwendung des Zentralstrahls als Referenzstrahl steht ein weiterer Teilstrahl als Messstrahl zur Verfügung.

Die Strahlteiler- und Mischeroptik ist als DOE (diffraktives optisches Element), insbesondere als computergeneriertes Hologramm (CGH) ausgebildet.

Das computergenerierte Hologramm kann ausgebildet sein, um zumindest zwei Teilbündel mit unterschiedlichen oder auch mit gleichen Intensitäten und beliebiger räumlicher 2D-Anordnung zu erzeugen. Die Strahlteiler- und Mischeroptik (DOE/CGH) kann zumindest ein kollimierendes oder fokussierendes Element umfassen. Das kollimierende oder fokussierende Element kann als ein refraktives Element oder auch diffraktives Element (Fresnelzonenlinse) realisiert sein.

Das kollimierende oder fokussierende Element kann mit dem diffraktiven Strahlteiler/-mischer Element gekoppelt sein. Insofern können Ausführungsbeispiele eine Anordnung mit für die Messung notwendigen optischen Komponenten bereitstellen. Ausführungsbeispiele können so einen kompakten und aufwandsgünstigen Aufbau der Anordnung ermöglichen.

Zumindest manche Ausführungsbeispiele umfassen einen thermischen Strahler als Lichtquelle, wobei die Lichtquelle ferner eine Kollimieroptik aufweist. Die Kollimieroptik kann einen reflektierenden Konzentrator umfassen, der um die Lichtquelle herum angeordnet ist. Ferner kann die Messeinrichtung eine Fokussier- oder Kollimieroptik vor einer Empfängereinheit umfassen. Die Kollimieroptik als auch die Fokussieroptik kann als refraktive Linse oder diffraktive Linse (z.B. Fresnelzonenlinse) ausgebildet sein. Die refraktive und die diffraktive Linse kann Silizium oder ein IR-transparentes Polymermaterial aufweisen. Die Konzentrierung der Teilstrahlen auf die Empfangszelle kann aber auch mittels eines Konzentrators (z.B. paraboloidisch ausgeformter, reflektierend beschichteter Tubus) erfolgen. Die Messeinrichtung kann ein oder mehrere wellenlängenselektive Filterelemente umfassen. Jeweils ein Filterelement kann vor einem Empfängerelement einer Licht-empfängereinheit angeordnet sein. Filter- und Empfängerelemente können in manchen Ausführungsbeispielen in zwei oder mehr Wellenlängen-Gruppen angeordnet sein, die räumlich voneinander getrennt sind. Ausführungsbeispiele können so eine Anordnung für eine Analyse eines Fluids kompakt und aufwandsgünstig bereitstellen.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 ein Blockdiagramm eines Ausführungsbeispiels einer Anordnung zur Analyse eines Fluids;
Fig. 2 eine Anordnung zur Analyse eines Fluids in einem Ausführungsbeispiel;
Fig. 3 ein computergeneriertes diffraktives optisches Element (CGH) in einem Ausführungsbeispiel;
Fig. 4 zeigt simulierte Intensitätsverteilungen in einem Ausführungsbeispiel;
Fig. 5 zeigt eine schematische Strahlaufteilung in einem Ausführungsbeispiel;
Fig. 6 ein Blockdiagramm eines Ausführungsbeispiels eines Verfahrens zur Analyse eines Fluids; und
Fig. 7 konventionelle Anordnungen zur Gasanalyse.

Verschiedene Ausführungsbeispiele werden nun ausführlicher unter Bezugnahme auf die beiliegenden Zeichnungen beschrieben, in denen einige Ausführungsbeispiele dargestellt sind.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas Anderes explizit oder implizit ergibt. Optionale Komponenten sind in den Figuren mit gestrichelten Linien oder Pfeilen dargestellt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts Anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

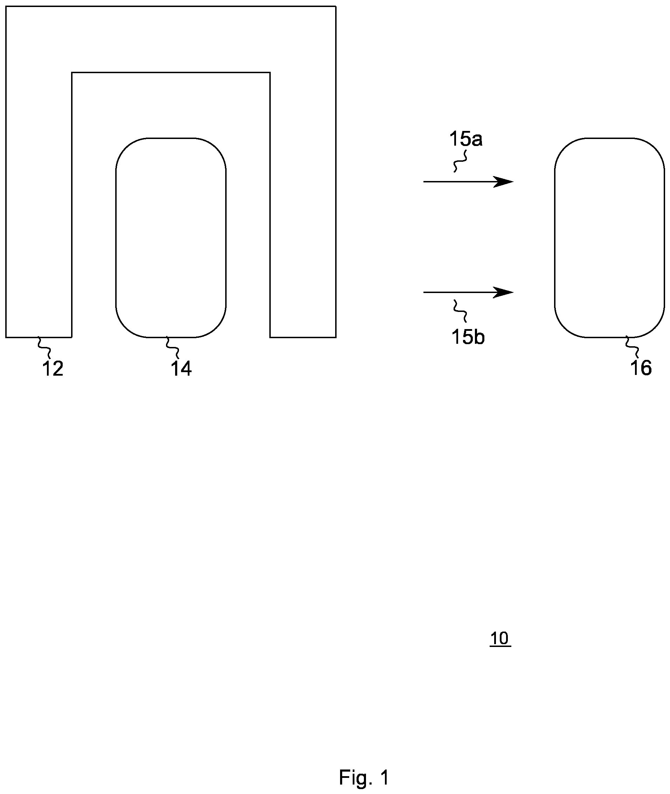

Fig. 1 zeigt ein Blockdiagramm einer Anordnung 10 zur Analyse eines Fluids. Im Folgenden sei unter einem Fluid ein flüssiger, gasförmiger oder dampfförmiger Stoff verstanden. Ausführungsbeispiele werden im Folgenden für gas- oder dampfförmige Proben beschrieben, wobei die gleichen Anordnungen und Aspekte auch für flüssige Proben zutreffen. In anderen Worten kann die Anordnung 10 in Ausführungsbeispielen zur Analyse eines gas- oder dampfförmigen Fluids ausgebildet sein. Die Analyse betrifft dabei ein Messen einer Absorptionscharakteristik in einem oder mehreren Wellenlängenbereichen um die Zusammensetzung des Fluids oder in dem Fluid vorhandene Moleküle/Elemente bzw. Molekül- oder Elementkonzentrationen zu messen. Licht wird dazu durch eine Probe gesendet, wo es durch die Probe spektral beeinflusst wird. Eine spektrale Analyse an dem von der Probe beeinflussten Licht kann dann Aufschluss über eine Zusammensetzung der Probe/des Fluids geben.

Vor diesem Hintergrund sei herausgestellt, dass unter einer spektralen Beeinflussung hierin eine Beeinflussung des Spektrums allgemein verstanden wird, die breitbandig oder auch schmalbandig sein kann. Eine typische Beeinflussung ist die Absorption oder Dämpfung des einfallenden Lichtes an bestimmten Spektrallinien durch Elemente/Moleküle oder Bestandteile der Probe. Wie im Folgenden noch näher erläutert werden wird, können die zunächst gleichermaßen spektral beeinflussten Teilbündel unterschiedlich gefiltert werden, beispielsweise um eine Intensität bei einer konkreten Spektrallinie zu untersuchen (die bekanntermaßen von einer Komponente der Probe beeinflusst wäre) oder auch um eine Referenz zu schaffen, beispielsweise bei einer benachbarten Spektrallinie, die nicht von der Komponente beeinflusst wäre. Ein Verhältnis der so gefundenen Intensitäten könnte dann eine Aussage über ein Vorhandensein oder auch eine Konzentration der Komponente in der Probe liefern. Die oben erwähnten Schmutzeffekte sind dabei zumeist breitbandig, d.h. sie beeinflussen das Spektrum im Wesentlichen gleichmäßig.

Die Anordnung 10 umfasst eine Strahlteiler- und Mischeroptik 12, die ausgebildet ist, um ein optisches Signal räumlich zu durchmischen und in zumindest zwei räumliche Teilbündel 15a, 15b aufzuteilen. Die optische Strahlteiler- und Mischeroptik 12 kann beispielsweise in Transmission arbeiten, was einen kompakten Aufbau erlaubt. Darüber hinaus umfasst die Anordnung 10 eine Durchflusszelle 14, die ausgebildet ist, um Mittels einer Probe des Fluids zumindest die zwei räumlichen Teilbündel 15a, 15b spektral zu beeinflussen. Die Durchflusszelle 14 kann dabei beispielsweise einer Küvette oder einem Probenbehälter entsprechen. Wie die Fig. 1 weiter zeigt umfasst die Anordnung 10 ferner eine Messeinrichtung 16, die ausgebildet ist, um die zumindest zwei räumlich getrennten Teilbündel 15a, 15b zu vermessen. In Ausführungsbeispielen gibt es verschiedenen Möglichkeiten wie die Strahlteiler- und Mischeroptik 12 relativ zu der Durchflusszelle 14 angeordnet sein kann. Dies ist durch die u-förmige Gestalt der Strahlteiler- und Mischeroptik 12 angedeutet.

Beispielsweise kann die Strahlteiler- und Mischeroptik 12 in Ausbreitungsrichtung des optischen Signals (von links nach rechts in den Figuren) vor der Durchflusszelle 14 angeordnet sein, um die Probe des Fluids mit den zwei räumlichen Teilbündeln 15a, 15b zu durchleuchten. In einem solchen Ausführungsbeispiel erfolgt die Durchleuchtung demnach mit den zumindest zwei Teilbündeln 15a, 15b. In einem anderen Ausführungsbeispiel kann die Strahlteiler- und Mischeroptik 12 in Ausbreitungsrichtung des optischen Signals auch hinter der Durchflusszelle 14 angeordnet sein, um die Probe des Fluids mit dem optischen Signal zu durchleuchten, bevor dieses in die zumindest zwei Teilbündel 15a, 15b aufgeteilt wird. Es ist auch eine entsprechende Kombination denkbar. In manchen Ausführungsbeispielen kann die Strahlteiler- und Mischeroptik 12 auch in die Durchflusszelle 14 integriert sein, dies kann beispielsweise durch Integration in ein Fenster oder eine Seitenwand der Durchflusszelle 14 realisiert werden.

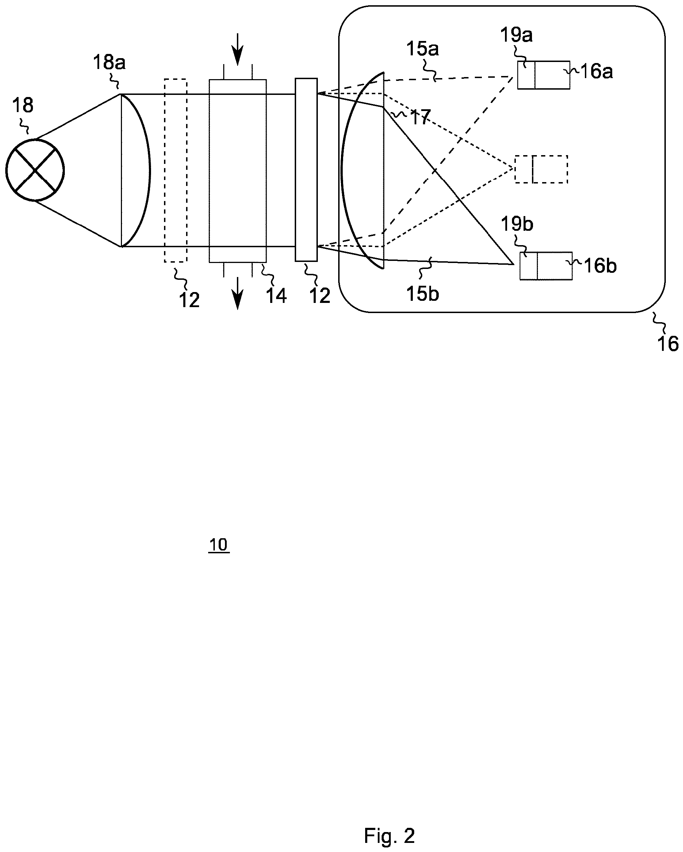

Fig. 2 illustriert eine Anordnung 10 zur Analyse eines Fluids in einem weiteren Ausführungsbeispiel. Die Fig. 2 illustriert eine Anordnung 10 zur Analyse eines Fluids bei der sich links eine Lichtquelle 18 befindet. Die Anordnung 10 umfasst in diesem Ausführungsbeispiel die zumindest eine Lichtquelle 18 zur Erzeugung des optischen Signals zur Durchleuchtung der Durchflusszelle 14. Der Strahlverlauf in der Fig. 2 ist demnach wieder von links nach rechts. Wie die Fig. 2 weiter zeigt ist der Lichtquelle 18 eine Kollimieroptik 18a nachgeschaltet.

In Ausführungsbeispielen kann die Lichtquelle 18 beispielsweise einen thermischen Strahler umfassen, der zumindest näherungsweise eine Strahlung mit einem kontinuierlichen Spektrum liefert.

In Abhängigkeit der Temperatur kann sich das Strahlungs-Maximum im abgestrahlten Spektrum entsprechend verschieben. Darüber hinaus können in Ausführungsbeispielen verschiedene Implementierungen der Kollimieroptik 18a vorkommen. Denkbar sind verschiedene Linsen, wobei in der Fig. 2 eine plan-konvexe Linse gezeigt ist, die im Zusammenspiel mit der Lichtquelle 18 zumindest näherungsweise paralleles Licht zur Durchleuchtung der Durchflusszelle 14 generiert. In anderen Ausführungsbeispielen kann die Kollimieroptik 18a beispielsweise auch einen reflektierenden Konzentrator umfassen, der um die Lichtquelle 18 herum angeordnet ist (z.B. Winston-Cone). Generell können Ausführungsbeispiele beliebige optische Elemente zur Strahlerzeugung, Leitung und Verarbeitung umfassen.

Die Fig. 2 zeigt ferner eine Durchflusszelle 14, die durch das von der Lichtquelle 18 mit Kollimieroptik 18a erzeugte Licht durchleuchtet wird. In dem gezeigten Ausführungsbeispiel ist die Strahlteiler- und Mischeroptik 12 der Durchflusszelle 14 nachgeschaltet und erzeugt zumindest zwei räumliche Teilbündel 15a, 15b, die anschließend von der Messeinrichtung 16 vermessen werden. Wie die Fig. 2 in gestrichelten Linien schematisch andeutet, kann die Strahlteiler- und Mischeroptik 12 auch vor der Durchflusszelle 14 angeordnet sein, so dass die Durchflusszelle von den zumindest zwei Teilbündeln 15a, 15b vollständig durchleuchtet wird.

Fig. 2 zeigt eine schematische Darstellung in der die Beugungswinkel der Teilstrahlen "überzeichnet" (also grösser als in der Regel üblich) dargestellt sind. Auch für den Fall, dass die Strahlteiler-und Mischeroptik 12 der Durchflusszelle 14 vorgeschaltet ist, kann gewährleistet werden, dass die Teilstrahlen evtl. Verschmutzungen an den Fenstern, die am Rand der Durchflusszelle 14 ("Küvettenrand") liegen, erfassen. Die Fokussier- oder Kollimieroptik 17, z.B. eine Linse, ist nicht zwingend erforderlich.

Da sich die Teilstrahlen der Strahlteiler-/und Mischeroptik erst im Fernfeld räumlich getrennt ausbilden, wird die Probe in der Durchflusszelle 14 auch in dieser Anordnung (nahezu) vollständig von den zumindest zwei Teilbündeln 15a, 15b durchleuchtet, so dass die Teilbündel 15a, 15b näherungsweise vollständig der durchleuchteten Fläche beeinflusst werden. Ferner sind auch Ausführungsbeispiele denkbar, die vor und hinter der Durchflusszelle eine Strahlteiler- und Mischeroptik 12 aufweisen, etwa um Teilbündel 15a, 15b weiter aufzuteilen. Darüber hinaus kann die Strahlteiler- und Mischeroptik 12 auch ganz oder teilweise in die Durchflusszelle integriert sein.

Die Fig. 2 illustriert ferner die Messeinrichtung 16, die eine Fokussier- oder Kollimieroptik 17 vor den zumindest zwei Empfängereinheiten 16a, 16b umfassen kann. Für die Fokussier- oder Kollimieroptik 17 kommen verschiedene Implementierungen in Frage. Die Fig. 2 zeigt hier eine Implementierung mit einer plan-konvexen Linse, die die zumindest zwei parallelen Teilbündel 15a, 15b auf die Empfängereinheiten fokussiert. Prinzipiell können hier beliebige optische Komponenten zum Einsatz kommen. Sowohl die Kollimieroptik 18a als auch die Fokussieroptik 17, 12b können als refraktive Linse oder diffraktive Linse oder Fresnelzonenlinse ausgebildet sein. Die refraktive und die diffraktive Linse kann Silizium oder ein IR-transparentes Polymermaterial aufweisen.

Die Messeinrichtung 16 umfasst in dem Ausführungsbeispiel der Fig. 2 eine Lichtempfangseinheit mit zumindest zwei Lichtempfängern 16a, 16b, die beispielsweise als Fotodetektoren (z.B. Fotodioden, Fototransistoren) implementiert sein können. Die Messeinrichtung 16 kann generell ein oder mehrere wellenlängenselektive Filterelemente 19a, 19b umfassen, die z.B. als Farbfilter implementiert sein können. Als Filterelemente können auch hier beliebige optische Filterelemente, wie Fabry-Perot-Filter, optische Resonatoren, Polarisationsfilter, etc. zum Einsatz kommen.

Jeweils ein Filterelement 19a, 19b kann dabei vor einem Empfängerelement 16a, 16a einer Licht-empfängereinheit angeordnet sein. Es sind jedoch auch andere Implementierungen beispielsweise mit mehreren Filterelementen vor einem Lichtempfänger oder auch einem Filterelement vor mehreren Empfängerelementen denkbar, beispielsweise bei mehrstufigen Filterkonzepten. In einigen weiteren Ausführungsbeispielen können die Filter- und Empfängerelemente 19a, 19b 16a, 16b, auch in zwei oder mehr Wellenlängen-Gruppen angeordnet sein, die räumlich voneinander getrennt sind. Die Messeinrichtung 16 liefert daher Messsignale, die auf die gefilterten optischen Signale der Teilbündel 15a, 15b zurückgehen.

In Ausführungsbeispielen sorgt die Strahlteiler- und Mischeroptik 12 dafür, dass die Probe in der Durchflusszelle 14 (groß-) flächig durchleuchtet werden kann und so die Signale in den zumindest zwei Teilbündeln 15a, 15b zumindest näherungsweise von der gesamten Durchleuchtungsfläche der Durchflusszelle 14 beeinflusst werden. Etwaige Störeinflüsse, die beispielsweise auf Verschmutzungen zurückgehen, nehmen daher (nahezu oder näherungsweise) gleichen Einfluss auf die Teilbündel 15a, 15b. Ausführungsbeispiele beruhen auf der Erkenntnis, dass die gleichförmige Verteilung (Durchmischung) aller lokalen Anteile eines Messlichtstrahls, der eine Probe durchdrungen hat, auf alle Empfängerelemente eines entsprechenden Arrays dazu führt, dass lokal auftretende Störungen im Bereich der Durchflusszelle/Kapillare/Probe, die zeitlich veränderlich und nur von einem Teil des Messlichtstrahls durchleuchtet werden, auf alle Sensorelemente gleichmäßig verteilt werden kann, so dass eventuelle Durchflussschwankungen, Verschmutzungen im Strahlengang etc. zu einer gleichartigen, zeitunabhängigen Beeinträchtigung aller Referenz- und Messkanäle führt und dieser Fehler durch die nachfolgende Normierung korrigiert werden kann.

Dieses Konzept ist generell anwendbar und kann im Prinzip mit jeder dazu geeigneten Optik ausgeführt werden. Die genaue Ausführung ist dabei natürlich von mehreren Faktoren abhängig. Diese sind insbesondere die Art der verwendeten Lichtquelle (welche Wellenlängen sind vorhanden, welche werden genutzt), vom Strahlprofil des (gebündelten) Lichtes, das die Durchflusszelle/Küvette 14 ausleuchten soll, von der Form und Art der Durchflusszelle/Küvette 14, und natürlich von der Anordnung der Empfänger im Empfängerarray (Messeinrichtung 16).

Die Anordnung 10 kann in Ausführungsbeispielen auch als optischer Sensor zur Gas-/Dampfanalyse eingesetzt werden. In manchen Ausführungsbeispielen arbeitet der Sensor vorzugsweise im nahen bis fernen Infrarot, insbesondere bei einer Wellenlänge zwischen 3µm und 12µm, kann jedoch für jeden beliebigen Wellenlängenbereich ausgelegt werden. Er ist für die Analyse der Inhaltsgase/-dämpfe und/oder Komposition eines Gases bzw. Dampfes in der Medizintechnik zur Atemgasanalyse, in der Verbrennungstechnik zur Abgasanalyse (z.B. Energietechnik aber auch Automobiltechnik), in der Umwelttechnik, in der Anlagenüberwachung, oder ganz allgemein für die Analyse von Gasen und Dämpfen vorgesehen bzw. einsetzbar.

In weiteren Ausführungsbeispielen sind Varianten der Anordnung 10 bzw. des Sensors für die Fluid-/Flüssigkeits-/Gas-/Dampfanalyse denkbar. In der Regel weisen sie eine Lichtquelle 18, eine Flusszelle/Kapillare 14 zum Durchströmen des zu analysierenden Fluid-/Gas-/Dampfgemisches, und eine Licht-Empfängereinheit (Detektor) 16 auf. Der Lichtfluss von der Lichtquelle 18 durch die Flusszelle/Kapillare 14 zu der Licht-Empfängereinheit 16 wird in der Regel durch optische Elemente wie Linsen, Kollimatoren, etc. geregelt. Über geeignete wellenlängen-selektive Auswerte- und Kalibrierverfahren (auf die hier nicht weiter eingegangen werden soll, da sie dem Fachmann auf dem Gebiet der Sensorik bekannt sind) kann dann (über die wellenlängenselektive Absorption der Fluide/Gase/Dämpfe) eine Fluid-/Gas-/Dampfanalyse durchgeführt werden.

Die Erfindung bezieht sich auf einen besonders kostengünstig herzustellenden und kompakten Aufbau einer dazu geeigneten Optik, d.h. der Strahlteiler- und Mischeroptik 12. Diese ist als ein besonderes, diffraktives Strahlteiler- und Mischerelement konzipiert, das beide erforderlichen Funktionen in der Detektorebene bereitstellt. Die Strahlteiler- und Mischeroptik 12 umfasst demnach ein diffraktives optisches Element/ computergeneriertes Hologramm 12a.

Beispielsweise kann die Strahlteiler- und Mischeroptik 12 ein computergeneriertes Hologramm umfassen, wie im Folgenden noch näher dargelegt werden wird. Ein Strahlteiler DOE bzw. ein CGH kann sich aus einer 2D-Matrix von vielen in x-/y-Richtung ("periodisch") aneinandergereihten Einheitszellen zusammensetzen.

Der Messaufbau in Ausführungsbeispielen gemäß der Fig. 2 kann hinsichtlich diverser Störeinflüsse Vorteile bieten. Hinter der Durchflusszelle 14 befindet sich beispielsweise ein diffraktives optisches Element, das auch als Computer-generiertes Hologramm realisiert sein kann, das das von der Lichtquelle 18 kommende Licht durchmischt und in zumindest zwei einzelne Teilbündel 15a, 15b aufteilt. Diese Aufteilung geschieht hier so, dass von jedem Teilbündel 15a, 15b ausgehend ein Anteil in Richtung eines jeden Empfängerelementes gelenkt wird (in der Fig. 2 sind nur zwei solche Sensorelemente gezeigt; das Prinzip kann aber auf eine nahezu beliebige Anzahl erweitert werden). Beispielsweise kann das diffraktive optische Element/ CGH ausgebildet sein, um eine 1 auf n Strahlteilung in n Teilstrahlen für n Messfelder vorzunehmen, wobei n eine natürliche Zahl größer als 1 ist.

Das von dem diffraktiven optischen Element / dem Computer-generierten Hologramm geteilte und durchmischte Licht kann dann von einer weiteren Optik 17 (z.B. einer Linse, einer bündelnden Optik oder konzentrierenden Optik) auf die Empfängerelemente 16a, 16b, die auch als Empfängereinheit realisiert sein können, fokussiert/ gelenkt/ konzentriert werden und fällt durch die Filter19a, 19b auf die Empfänger/Detektoren 16a, 16b. Da bei dieser Anordnung 10 keine räumliche Selektion des Messlichtes stattfindet, haben lokal auftretende Störungen an der Durchflusszelle/Küvette 14 keinen Einfluss auf das Messergebnis.

Die Strahlteiler- und Mischeroptik ist als DOE (diffraktives optisches Element), insbesondere als CGH (Computer-Generiertes Hologram) ausgebildet.

Ein solches Strahlteiler- Mischerelement 12 weist dabei ein Array (Feldanordnung) von mikrostrukturierten Einheitszellen 12c auf, die periodisch in zwei Raumrichtungen angeordnet sind. Dabei weist jede Einheitszelle die gleiche optische Funktion auf, z.B. eine Aufteilung in zumindest 2 Teilstrahlen 15a, 15b, (Fig. 2) auf, wobei z.B. jeder Teilstrahl in etwa die gleiche, aber auch eine definierte unterschiedliche, Teil-Intensität besitzen kann, und in ihrer Summe dann einen einfallenden Lichtstrahl entsprechend aufteilen.

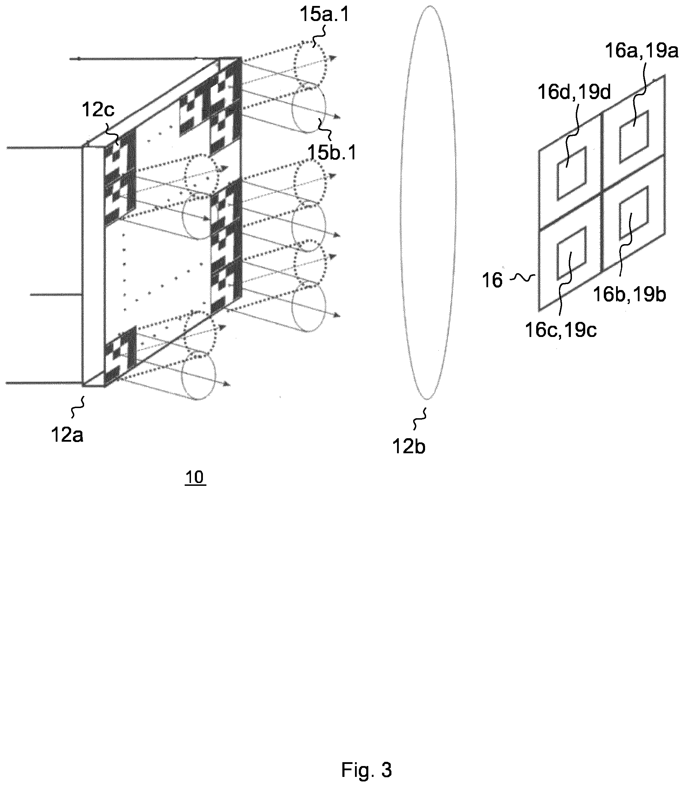

Fig. 3 zeigt ein diffraktives optisches Element 12a in einem ersten Ausführungsbeispiel eines 1 auf 4-Strahlteiler-/Mischerelementes. Das DOE 12a ist aus Einheitszellen 12c eines CGH zusammengesetzt, die periodisch in beide Raumrichtungen in einer flächigen Struktur (Feldanordnung, Array) bzw. matrixartig aneinandergesetzt sind. Wie die Fig. 3 weiter zeigt, teilt jede Einheitszelle 12c den eintreffenden Lichtstrahl durch Beugung auf die Einheits-Teilbündel 15a.1, 15b.1 (die beiden weiteren Einheitsteilbündel sind der Übersichtlichkeit halber nicht dargestellt) auf. Die Einheits-Teilbündel 15a.1, 15b.1 setzen sich dann zu den in der vorherigen Fig. 2 gezeigten Teilbündeln 15a, 15b, zusammen. In der Fig. 3 sind jeweils zwei Teilbündel 15a.1, 15b.1 pro Einheitszelle 12c mit unterschiedlichen Linienarten dargestellt. Das diffraktive optische Element 12a der Fig. 3 ist ausgebildet, um als 1 auf 4 Strahlteiler eine Aufteilung in 4 Quadranten eines Empfängerarrays mit den Empfängerelementen 16a, 16b, 16c, 16d und vorgeschalteten Filterelementen 19a, 19b, 19c, 19d vorzunehmen, die in der Fig. 3 rechts dargestellt sind. Der Übersichtlichkeit und Anschaulichkeit halber sind in der Fig. 3 nur die hinteren beiden Teilstrahlen 15a und 15b dargestellt; die beiden vorderen Teilstrahlen 15c und 15d sind nicht abgebildet. Auch der Strahlengang durch die Optik 12b und die Fokussierung auf den 4-Kanaldetektor 16 sind nicht dargestellt.

In Fig. 3 bezeichnet 12c eine Einheitszelle. Durch die periodische Wiederholung von mindestens 2x2 dieser Einheitszellen (2 in x-Richtung, 2 in y-Richtung) kann im Fernfeld eine berechnete Funktion, z.B. Strahl-Aufteilung von z.B. 2x2 Teilstrahlen, beobachtet werden. Im Allgemeinen wird in Ausführungsbeispielen eine "Vielzahl" von Einheitszellen (in x- / y- Richtung) verwendet werden, die jede für sich, die "Funktion" der "entsprechenden Strahlaufteilung" in sich trägt. Durch die konstruktive Überlagerung der vielen Teilstrahlen einer Vielzahl von Einheitszellen führt im Fernfeld zu einer "deutlichen "Ausbildung der z.B. 4 = 2 (in x-Richtung) x 2 (y-Richtung) Teilstrahlen. Die Linse 12b in Fig. 3 ist nicht unbedingt erforderlich.

Das beispielsweise für eine mittlere Wellenlänge im Infraroten von 8,4 µm (als 2-stufiges Phasenelement) berechnete transmissive DOE/CGH teilt einen mittels eines Winston-Cone (Kollier-Optik) nahezu kollimierten einfallenden Strahl einer (breitbandigen) Lichtquelle 18, in vier Lichtkeulen (15a, 15b, usw.) auf, die im Fernfeld in einer Ebene jeweils auf ein entsprechendes Messfeld der Empfängereinheit 16 (hier ein Vier-Kanaldetektor mit den vier Empfängerelementen 16a-d und den vier entsprechenden wellenlängenselektiven Filtern (19a-19d) auftreffen (Fig. 3). Dabei führt die generelle Eigenschaft eines DOEs, dass die angestrebte optische Funktion (hier die Aufteilung eines Messstrahls in 4 Teilstrahlen) erst im Fernfeld auftritt, dazu, dass das durch das DOE 12a durchgetretene Licht auch durchmischt wird, wodurch der Mittelungseffekt gegenüber Störeinflüssen eintritt.

Ein konkretes Ausführungsbeispiel für die Bestimmung der Konzentration von halogenierten Kohlenwasserstoffen wie z. B. volatile Anästhesiemittel (Isofluran, Sevofluran, Desfluran) verwendet ein DOE/CGH als Strahlteiler- und Mischeroptik zur Aufteilung des (breitbandigen) Lichts in 4 Teilstrahlen mit annähernd gleicher Intensität auf die 4 "Quadranten" eines 4-Kanaldetektors. Als Quelle für den Wellenlängenbereich zwischen 8µm und 11 µm dient ein thermischer Strahler, mit einem Winston-Cone-Reflektor zur Strahlformung. Der 1 auf 4-Strahlteiler/-Mischer (CGH) wurde als binäres transmissives Phasenelement für die mittlere Wellenlänge von 8,4 µm berechnet und ausgeführt. Die vom DOE/CGH generierten 4 Teilstrahlen treffen nach Durchstrahlen der Messzelle (Küvette) im Abstand von 10 mm auf den 4-Kanaldetektor, der mit den 3 Messfiltern (19a bis 19c) -bei den Wellenlängen 8,2 µm, 8,4 µm und 8,6 µm und dem Referenzfilter 19d (für die Wellenlänge 10,5 µm) ausgeführt ist.

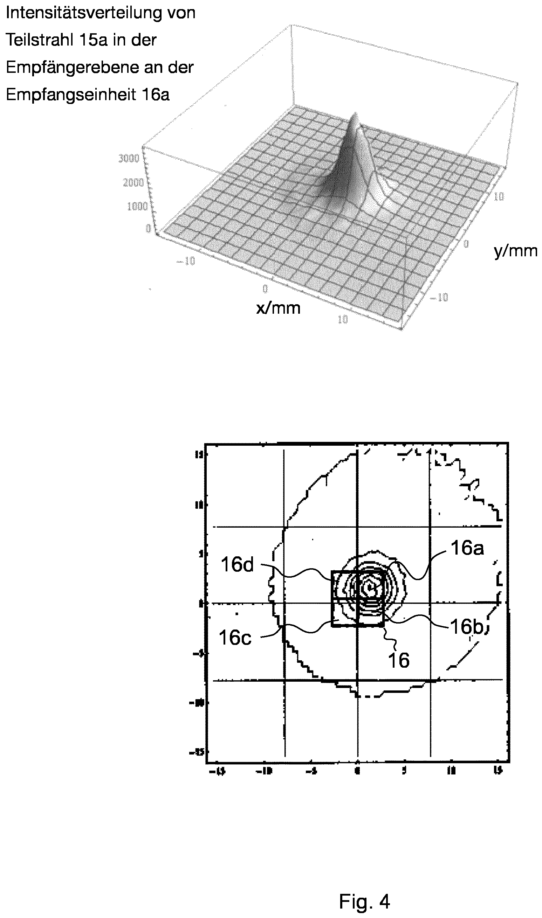

Die spektrale Lage der Messkanäle wurden dabei so ausgewählt, dass dort eine möglichst große Gasart-spezifische Schwächung der Strahlung auftritt, während an der spektralen Position des Referenzkanales keine oder eine nur vernachlässigbare Absorption der Strahlung durch das Mess-Gas stattfindet. Der Referenzkanal bleibt damit unbeeinflusst von dem Mess-Gas und dient zur Erfassung der Intensität der auftreffenden Strahlung. Fig. 4 zeigt exemplarisch für die vier Teilstrahlen, die simulierte Intensitätsverteilung des Teilstrahls 15a, die man für den von einem Winston-Cone nahezu kollimierten Strahl eines thermischen Strahlers nach Durchgang durch das computergenerierte 1 auf 4-Strahlteiler- und Mischerelement in der Empfängerebene im Abstand 10 mm im Detektorfeld (16a) erhält. In Fig. 4 oben ist die simulierte Intensitätsverteilung für die Wellenlänge 8,2 µm in einer dreidimensionalen Darstellung (3D-Plot) und unten als Konturplot dargestellt. Die Berechnung /Simulation der Intensitätsverteilung der Teilstrahlen in der Detektorebene wurde ohne Verwendung einer zusätzlichen Fokussieroptik durchgeführt.

Beide Darstellungen zeigen, dass die Intensität des jeweiligen Teilbündels mittels des Strahlteiler-und Mischerelements 12 auf jeweils einen Quadranten der Messeinrichtung 16 gebeugt werden kann. Varianten der Funktionen des DOE sind ohne weiteres möglich. Statt einer gleichförmigen Aufteilung in vier Teilbündel ist, z.B. durch Verwendung eines mehrstufigen Phasen DOEs, eine solche auch in eine beliebige andere Anzahl von Teilbündeln mit unterschiedlichen Intensitäten möglich. Ebenso ist es möglich z.B. ein Referenzteilbündel vorzusehen, das eine andere Intensität als die umliegenden Teilbündel aufweisen kann. Ferner kann die Strahlteiler- und Mischeroptik 12 ausgebildet sein, um ein zentrales Strahlungsbündel zu erzeugen, das als Referenz für andere Strahlungsbündel nutzbar ist. Das computergenerierte Hologramm bzw. die Strahlteiler- und Mischeroptik 12 kann ausgebildet sein, um die zumindest zwei räumlichen Teilbündel 15a, 15b mit unterschiedlichen Intensitäten und beliebiger räumlicher Anordnung zu erzeugen.

Ein Referenzteilbündel kann z.B. zentral angeordnet werden (zur Ausnutzung der zentralen Beugungsordnung), wie dies in der Fig. 2 durch den gestrichelten Strahlverlauf und die zentral angeordnete gestrichelte Empfängereinheit angedeutet ist. Weiterhin ist es möglich, jedes Teilbündel oder auch bestimmte Gruppen von Teilbündeln mit unterschiedlichen Intensitäten vorzusehen. Die freie Wahl des Teilungsverhältnisses der einfallenden Strahlung auf die Teilbündel, ist besonders dort vorteilhaft, wo Mess- oder Referenzkanäle unterschiedliche Anforderungen an ein Signal-zu-Rauschverhältnis S/N-Verhältnis und zeitliche Messdynamik stellen: So kann beispielsweise für den Referenzkanal gelten, dass dort üblicherweise nur zeitlich langsame Signaländerungen erfasst werden müssen und damit ein längerer Mittelungszeitraum zur Verfügung steht als für übrige Messkanäle, die auch noch rasche Konzentrationsänderungen erfassen müssen. Damit erfordert der Referenzkanal ein geringeres Teilungsverhältnis zu Gunsten eines entsprechenden höheren Gewichts für die übrigen Messkanäle bei gutem oder sogar optimalem S/N-Verhältnis.

Weiterhin lassen sich damit spektraler Gang der Emission des verwendeten Strahlers und unterschiedliche-Bandbreiten der verwendeten optischen Filter für die Mess- und Referenzkanäle ausgleichen. Auf diese Weise ist es mit einem DOE/CGH in Ausführungsbeispielen möglich, die einfallende Strahlung je nach Messanordnung und -anforderung günstig oder sogar optimal aufzuteilen.

Auch die Aufteilung an sich muss nicht in Form eines Quadranten erfolgen, d.h. es sind beliebige 2-dimensionale Anordnungen realisierbar. In Ausführungsbeispielen können zur Erstellung/Berechnung eines entsprechenden DOE-Designs/ DOE-Patterns kommerziell erhältliche Software Tools verwendet werden. Die Herstellung eines entsprechenden DOEs/CGHs ist beispielsweise mit, dem Fachmann aus der Halbleiterindustrie bekannten, Mikrostrukturierungstechnologien (z.B. Lithographie und einer Tiefenstrukturierung mittels Ätzens und entsprechenden Ätzmasken) möglich.

Die Materialien, die für das DOE/CGH verwendet werden können, sind primär von den Messwellenlängen abhängig, d.h. das Material muss eine ausreichend hohe Transmissivität aufweisen. Für das Infrarotlicht zwischen 3µm und 13µm eignet sich beispielsweise Silizium, da es in diesem Wellenlängenbereich eine hohe Transmission besitzt und außerdem sehr kostengünstig in hohen Stückzahlen strukturiert werden kann. Strahlteiler-Anwendungen, in denen die Messkanäle auf mehrere unterschiedliche Wellenlängenbereiche aufgeteilt sind, wie es beispielsweise in der Anästhesie-Atemgasanalyse typisch ist,- CO₂- und N₂O-Messkanäle in einem ersten Wellenlängenbereich Δ*λ*₁ zwischen 3µm und 5µm und (mehrere) Messkanäle für die dampfförmigen volatilen Anästhesiemittel (wie z.B. Isofluran, Sevofluran, Desfluran) in einem zweiten Wellenlängenbereich Δ*λ*₂ zwischen 8µm und 10µm-, profitieren von den Eigenschaften der DOE / CHG in besonderen Maße: Da die Beugungswinkel ϕ für die Teilbündel von der Wellenlänge λ gemäß sin ϕ ∼λ abhängig sind, erscheinen die Orte maximaler Intensität für eine erste Gruppe Teilbündel aus dem Wellenlängenbereich Δ*λ*₁ räumlich getrennt von denen einer zweiten Gruppe Teilbündel aus dem Wellenlängenbereich Δ*λ*₂ mit einer ähnlichen Verteilung unter entsprechend größeren Beugungswinkeln.

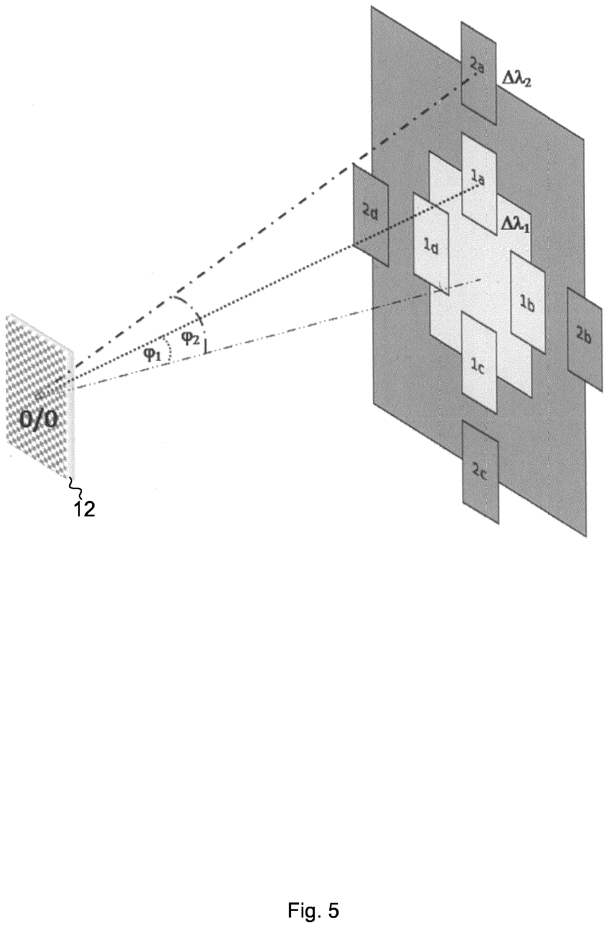

Dieser Zusammenhang soll durch die Fig. 5 näher verdeutlicht werden. Die Fig. 5 zeigt eine schematische Strahlaufteilung in einem Ausführungsbeispiel mit einem DOE 12 (befindet sich in Position "0") auf vier Filterelemente (1a, 1b, 1c, 1d) aus einem ersten Wellenlängenbereich Δ*λ*₁ unter dem Winkel *ϕ*₁ und unabhängig auf vier weitere Filterelemente (2a, 2b, 2c, 2d) aus einem zweiten Wellenlängenbereich Δ*λ*₂ unter dem Winkel *ϕ*₂ mit Δ*λ*₂ > Δ*λ*₁.

Diese Eigenschaft des DOE 12 kann den Vorteil bieten, dass eine Strahlteilung in eine erste Teilbündelgruppe 1 erfolgen kann, ohne dass dies die Gesamtintensität der Teilbündelgruppe 2 beeinträchtigt. Dies gestattet eine effektive und ökonomische Strahlteilung, die die spektrale Zusammensetzung der einfallenden Strahlung ausnutzt und die Teilbündel wellenlängen-angepasst auf die Messkanäle aus unterschiedlichen Wellenlängenbereichen mit nur einem Strahlteiler-DOE aufteilt.

Die Verwendung von DOE 12a in Ausführungsbeispielen kann einen kostengünstigen und kompakten optischen Aufbau ermöglichen. DOEs können z.B. in geeigneten Materialen mittels ebenfalls bekannten Replikationstechniken in hohen Stückzahlen und zu niedrigen Kosten abgeformt werden. Die Strahlteiler- und Mischeroptik 12 kann in Ausführungsbeispielen auch eine Optik (Linse, Kollimator, Konzentrator) enthalten, die entweder vor, nach, oder jeweils vor und nach dem diffraktiven Element angeordnet ist. Dies ist in der Fig. 4 durch das Element 12b angedeutet. Die Strahlteiler- und Mischeroptik 12 kann zumindest ein kollimierendes oder fokussierendes Element 12b umfassen. Das zumindest eine kollimierende oder fokussierende Element 12b kann mit dem diffraktiven Element gekoppelt sein. Beispielsweise kann das kollimierende oder fokussierende Element 12b ein refraktives oder diffraktives Element sein, das auch direkt mit dem diffraktiven Element gekoppelt sein kann.

Beispielsweise kann vor, nach, oder vor und nach dem diffraktiven Element 12a eine refraktive Linse 12a angeordnet sein. Diese Linse kann bevorzugt auf einer, dem diffraktiven Element gegenüberliegenden Oberfläche des Basissubstrates, angeordnet sein. Es ist aber auch möglich, die fokussierende oder kollimierende Funktion als zusätzliche Funktion direkt in das Strahlmischende-und teilende DOE/CGH zu integrieren oder als separates DOE/CGH auf der dem Strahlteiler/- Mischer-DOE gegenüberliegenden Seite zu integrieren.

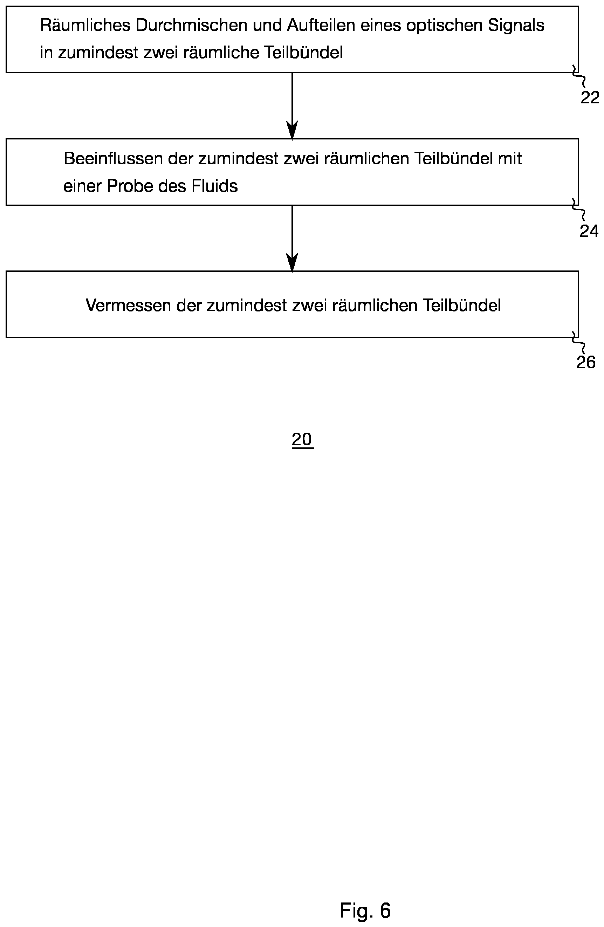

Fig. 6 zeigt ein Blockdiagramm eines Ausführungsbeispiels eines Verfahrens 20 zur Analyse eines Fluids. Das Verfahren umfasst räumliches Durchmischen und Aufteilen 22 eines optischen Signals in zumindest zwei räumliche Teilbündel 15a, 15b. Das Verfahren 20 umfasst ferner Beeinflussen 24 der zumindest zwei räumlichen Teilbündel 15a, 15b mit einer Probe des Fluids und Vermessen 26 der zumindest zwei räumlichen Teilbündel 15a, 15b.

Die in der vorstehenden Beschreibung, den Ansprüchen und den Zeichnungen offenbarten Merkmale können sowohl einzeln als auch in beliebiger Kombination für die Verwirklichung von Ausführungsbeispielen in ihren verschiedenen Ausgestaltungen von Bedeutung sein und - soweit sich nicht aus der Beschreibung etwas anderes ergibt - beliebig miteinander kombiniert werden.

Obwohl manche Aspekte im Zusammenhang mit einem Verfahren bzw. einer Vorrichtung beschrieben wurden, versteht es sich, dass diese Aspekte auch eine Beschreibung der entsprechenden Vorrichtung bzw. des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist, und umgekehrt. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Anordnung (10) zur Analyse eines Fluids, umfassend
eine Strahlteiler- und Mischeroptik (12), die ausgebildet ist, um ein optisches Signal räumlich zu durchmischen und in zumindest zwei räumliche Teilbündel (15a; 15b) aufzuteilen:
eine Durchflusszelle (14), die ausgebildet ist, um mittels einer Probe des Fluids die zumindest zwei räumlichen Teilbündel (15a; 15b) oder das optische Signal spektral zu beeinflussen; und
eine Messeinrichtung (16) mit n Messfeldern, die ausgebildet ist, um die zumindest zwei räumlich getrennten Teilbündel (15a; 15b) zu vermessen,
wobei die Durchflusszelle (14) von jedem der zumindest zwei räumlichen Teilbündel (15a; 15b) im Wesentlichen vollständig durchleuchtet wird, und
wobei die Strahlteiler- und Mischeroptik (12) ein diffraktives optisches Element (12a) umfasst, das ausgebildet ist, um das optische Signal räumlich zu durchmischen und um eine 1 auf n Strahlteilung in n Teilbündel (15a; 15b) für n Messfelder der Messeinrichtung (16) vorzunehmen, wobei n eine natürliche Zahl größer als 1 ist.

2. Anordnung (10) gemäß Anspruch 1, wobei die Strahlteiler- und Mischeroptik (12) in Ausbreitungsrichtung des optischen Signals vor der Durchflusszelle (14) angeordnet ist, um die Probe des Fluids mit den zumindest zwei räumlichen Teilbündeln (15a; 15b) zu durchleuchten.

3. Anordnung (10) gemäß Anspruch 1, wobei die Strahlteiler- und Mischeroptik (12) in Ausbreitungsrichtung des optischen Signals hinter der Durchflusszelle (14) angeordnet ist, um die Probe des Fluids mit dem optischen Signal zu durchleuchten.

4. Anordnung (10) gemäß einem der vorangehenden Ansprüche, die zur Analyse eines gas-oder dampfförmigen Fluids ausgebildet ist.

5. Anordnung (10) gemäß einem der vorangehenden Ansprüche, die zumindest eine Lichtquelle (18) zur Erzeugung des optischen Signals zur Durchleuchtung der Durchflusszelle (14) aufweist.

6. Anordnung (10) gemäß einem der vorangehenden Ansprüche, wobei die Messeinrichtung (16) eine Lichtempfangseinheit mit zumindest zwei Lichtempfängern (16a; 16b) mit jeweils vorgeschalteten und zugehörigen Filtern (19a, 19b) aufweist.

7. Anordnung (10) gemäß einem der Ansprüche 1 bis 6, wobei das diffraktive optische Element (12a) ausgebildet ist, um als 1 auf n Strahlteiler eine Aufteilung in zumindest 4 Quadranten vorzunehmen.

8. Anordnung (10) gemäß einem der vorangehenden Ansprüche, wobei die Strahlteiler- und Mischeroptik (12) ausgebildet ist, um ein ungebeugtes zentrales Strahlungsbündel zu erzeugen, das als Referenz für andere Strahlungsbündel nutzbar ist.

9. Anordnung (10) gemäß einem der vorangehenden Ansprüche, wobei die Strahlteiler- und Mischeroptik (12) zumindest ein kollimierendes oder fokussierendes Element (12b) umfasst.

10. Anordnung (10) gemäß Anspruch 9, wobei das zumindest eine kollimierende oder fokussierende Element (12b) mit dem diffraktiven Element gekoppelt (12a) ist.

11. Anordnung (10) gemäß Anspruch 10, wobei das kollimierende oder fokussierende Element (12b) ein refraktives Element ist, das in Ausbreitungsrichtung des optischen Signals hinter dem diffraktiven Element (12a) angeordnet ist.

12. Anordnung (10) gemäß einem der vorangehenden Ansprüche, wobei die Strahlteiler- und Mischeroptik (12) ein computergeneriertes Hologramm umfasst.

13. Anordnung (10) gemäß Anspruch 12, wobei das computergenerierte Hologramm zumindest ein kollimierendes oder fokussierendes Element umfasst.

14. Anordnung (10) gemäß einem der Ansprüche 12 oder 13, wobei das computergenerierte Hologramm ausgebildet ist, um die zumindest zwei räumlichen Teilbündel (15a; 15b) mit unterschiedlichen Intensitäten zu erzeugen.

15. Anordnung (10) gemäß einem der vorangehenden Ansprüche, die einen thermischen Strahler als Lichtquelle (18) umfasst, und wobei die Lichtquelle eine Kollimieroptik (18a) aufweist.

16. Anordnung (10) gemäß Anspruch 15, wobei die Kollimieroptik (18a) einen reflektierenden Konzentrator umfasst, der um die Lichtquelle (18) herum angeordnet ist.

17. Anordnung (10) gemäß einem der vorangehenden Ansprüche, wobei die Messeinrichtung (16) eine Fokussieroptik (17) vor einer Empfängereinheit (16a; 16b) umfasst.

18. Anordnung (10) gemäß Anspruch 16 und 17, wobei sowohl die Kollimieroptik (18a) als auch die Fokussieroptik (17, 12b) als refraktive Linse oder diffraktive Linse oder Fresnelzonenlinse ausgebildet ist/sind oder wobei die refraktive und die diffraktive Linse Silizium oder ein IR-transparentes Polymermaterial aufweisen.

19. Anordnung (10) gemäß einem der Ansprüche 6 bis 18, wobei die Messeinrichtung (16) ein oder mehrere wellenlängenselektive Filterelemente (19a; 19b) als vorgeschaltete und zugehörige Filter (19a; 19b) umfasst und wobei jeweils ein Filterelement (19a; 19b) vor einem Empfängerelement (16a; 16b) einer Lichtempfängereinheit angeordnet ist.

20. Anordnung (10) gemäß Anspruch 19, wobei Filter- und Empfängerelemente (19a; 19b und 16a; 16b;) in zwei oder mehr Wellenlängen-Gruppen angeordnet sind, die räumlich voneinander getrennt sind.

21. Verfahren (20) zur Analyse eines Fluids mit den Schritten
räumliches Durchmischen und Aufteilen (22) eines optischen Signals in zumindest zwei räumliche Teilbündel (15a; 15b) mit einem diffraktiven optischen Element (12a), um das optische Signal räumlich zu durchmischen und um eine 1 auf n Strahlteilung in n Teilbündel (15a; 15b) für n Messfelder zu erhalten, wobei n eine natürliche Zahl größer als 1 ist;
Beeinflussen (24) der zumindest zwei räumlichen Teilbündel (15a; 15b) oder des optischen Signals mit einer Probe des Fluids, wobei die Probe von jedem der zumindest zwei räumlichen Teilbündel (15a; 15b) im Wesentlichen vollständig durchleuchtet wird; und
Vermessen (26) der zumindest zwei räumlichen Teilbündel (15a; 15b).

## Claims

1. An arrangement (10) for analyzing a fluid, comprising
beam splitter and mixer optics (12) configured to spatially mix an optical signal and split the same into at least two spatial sub-beams (15a; 15b);
a flow cell (14) configured to spectrally influence the at least two spatial sub-beams (15a; 15b) or the optical signal by means of a sample of the fluid; and
a measuring device (16) with n measuring fields that is configured to measure the at least two spatially separated sub-beams (15a; 15b),
wherein the flow cell (14) is substantially completely transilluminated by each of the at least two spatial sub-beams (15a; 15b), and
wherein the beam splitter and mixer optics (12) comprise a diffractive optical element (12a) configured to spatially mix the optical signal and to perform a beam splitting of 1 to n into n sub-beams (15a; 15b) for n measuring fields of the measuring device (16), wherein n is a non-negative integer greater than 1.

2. The arrangement (10) of claim 1, wherein the beam splitter and mixer optics (12) are arranged in front of the flow cell (14) in the direction of propagation of the optical signal in order to transilluminate the sample of the fluid with the at least two spatial sub-beams (15a; 15b).

3. The arrangement (10) of claim 1, wherein the beam splitter and mixer optics (12) are arranged behind the flow cell (14) in the direction of propagation of the optical signal in order to transilluminate the sample of the fluid with the optical signal.

4. The arrangement (10) of any one of the preceding claims, configured to analyze a gaseous or vaporous fluid.

5. The arrangement (10) of any one of the preceding claims, comprising at least one light source (18) configured to generate the optical signal for transilluminating the flow cell (14).

6. The arrangement (10) of any one of the preceding claims, wherein the measuring device (16) comprises a light receiving unit having at least two light receivers (16a; 16b) each comprising upstream and associated filters (19a, 19b).

7. The arrangement (10) of any one of claims 1 to 6, wherein the diffractive optical element (12a) is configured to, as a 1 to n beam splitter, perform a split into at least 4 quadrants.

8. The arrangement (10) of any one of the preceding claims, wherein the beam splitter and mixer optics (12) are configured to generate an undiffracted central radiation beam usable as a reference for other radiation beams.

9. The arrangement (10) of any one of the preceding claims, wherein the beam splitter and mixer optics (12) comprise at least one collimating or focusing element (12b).

10. The arrangement (10) of claim 9, wherein the at least one collimating or focusing element (12b) is coupled (12a) to the diffractive element.

11. The arrangement (10) of claim 10, wherein the collimating or focusing element (12b) is a refractive element arranged behind the diffractive element (12a) in the direction of propagation of the optical signal.

12. The arrangement (10) of any one of the preceding claims, wherein the beam splitter and mixer optics (12) comprise a computer-generated hologram.

13. The arrangement (10) of claim 12, wherein the computer-generated hologram comprises at least one collimating or focusing element.

14. The arrangement (10) of any one of claims 12 or 13, wherein the computer-generated hologram is configured to generate the at least two spatial sub-beams (15a; 15b) having different intensities.

15. The arrangement (10) of any one of the preceding claims, comprising a thermal emitter as a light source (18), and wherein the light source comprises collimating optics (18a).

16. The arrangement (10) of claim 15, wherein the collimating optics (18a) comprise a reflective concentrator arranged around the light source (18).

17. The arrangement (10) of any one of the preceding claims, wherein the measuring device (16) comprises focusing optics (17) in front of a receiver unit (16a; 16b).

18. The arrangement (10) of claim 16 and 17, wherein both the collimating optics (18a) and the focusing optics (17, 12b) are configured as a refractive lens or a diffractive lens or a Fresnel zone lens, or wherein the refractive and diffractive lenses comprise silicon or an IR-transparent polymer material.

19. The arrangement (10) of any one of claims 6 to 18, wherein the measuring device (16) comprises one or more wavelength-selective filter elements (19a; 19b) as upstream and associated filters (19a; 19b), and wherein a filter element (19a; 19b) is in each case arranged in front of a receiver element (16a; 16b) of a light receiver unit.

20. The arrangement (10) of claim 19, wherein filter and receiver elements (19a; 19b and 16a; 16b;) are arranged in two or more wavelength groups that are spatially separated from each other.

21. A method (20) for analyzing a fluid comprising the steps of
spatially mixing and splitting (22) an optical signal into at least two spatial sub-beams (15a; 15b) with a diffractive optical element (12a) to spatially mix the optical signal and to obtain a beam splitting of 1 to n into n sub-beams (15a; 15b) for n measuring fields, wherein n is a non-negative integer greater than 1;
influencing (24) the at least two spatial sub-beams (15a; 15b) or the optical signal with a sample of the fluid, wherein the sample is substantially completely transilluminated by each of the at least two spatial sub-beams (15a; 15b); and
measuring (26) the at least two spatial sub-bundles (15a; 15b).

## Revendications

1. Agencement (10) d'analyse d'un fluide, comprenant
une optique de séparateur et de mélangeur de faisceaux (12), qui est configurée pour mélanger spatialement un signal optique et le diviser en au moins deux sous-faisceaux spatiaux (15a ; 15b) ;
une cellule d'écoulement (14) qui est configurée pour influencer spectralement les au moins deux sous-faisceaux spatiaux (15a ; 15b) ou le signal optique au moyen d'un échantillon du fluide ; et
un dispositif de mesure (16) ayant n champs de mesure, qui est configuré pour mesurer les au moins deux sous-faisceaux (15a ; 15b) séparés dans l'espace,
dans lequel la cellule d'écoulement (14) est sensiblement complètement éclairée par chacun des au moins deux sous-faisceaux spatiaux (15a ; 15b), et
dans lequel l'optique de séparateur et de mélangeur de faisceaux (12) comprend un élément optique diffractif (12a) qui est configuré pour mélanger spatialement le signal optique et pour effectuer une séparation de faisceaux de 1 sur n en n sous-faisceaux (15a ; 15b) pour n champs de mesure du dispositif de mesure (16), n étant un entier naturel supérieur à 1.

2. Agencement (10) selon la revendication 1, dans lequel l'optique de séparateur et de mélangeur de faisceaux (12) est disposée en amont de la cellule d'écoulement (14) dans la direction de propagation du signal optique afin d'éclairer l'échantillon du fluide avec les au moins deux sous-faisceaux spatiaux (15a ; 15b).

3. Agencement (10) selon la revendication 1, dans lequel l'optique de séparateur et de mélangeur de faisceaux (12) est disposée en aval de la cellule d'écoulement (14) dans la direction de propagation du signal optique afin d'éclairer l'échantillon du fluide avec le signal optique.

4. Agencement (10) selon l'une des revendications précédentes, configuré pour l'analyse d'un fluide à l'état gazeux ou de vapeur.

5. Agencement (10) selon l'une des revendications précédentes, qui comprend au moins une source lumineuse (18) configurée pour générer le signal optique pour éclairer la cellule d'écoulement (14).

6. Agencement (10) selon l'une des revendications précédentes, dans lequel le dispositif de mesure (16) comprend une unité de réception de lumière ayant au moins deux récepteurs de lumière (16a ; 16b) comprenant chacun un filtre (19a, 19b) en amont et associé.

7. Agencement (10) selon l'une des revendications 1 à 6, dans lequel l'élément optique diffractif (12a) est configuré pour effectuer une division en au moins 4 quadrants en tant que 1 sur n séparateurs de faisceaux.

8. Agencement (10) selon l'une des revendications précédentes, dans lequel l'optique de séparateur et de mélangeur de faisceaux (12) est configurée pour générer un faisceau de rayonnement central non diffracté qui est utilisable comme référence pour d'autres faisceaux de rayonnement.

9. Agencement (10) selon l'une des revendications précédentes, dans lequel l'optique de séparateur et de mélangeur de faisceaux (12) comprend au moins un élément de collimation ou de focalisation (12b).

10. Agencement (10) selon la revendication 9, dans lequel le au moins un élément de collimation ou de focalisation (12b) est couplé (12a) à l'élément diffractif.

11. Agencement (10) selon la revendication 10, dans lequel l'élément de collimation ou de focalisation (12b) est un élément réfractif disposé en aval de l'élément diffractif (12a) dans la direction de propagation du signal optique.

12. Agencement (10) selon l'une des revendications précédentes, dans lequel l'optique de séparateur et de mélangeur de faisceaux (12) comprend un hologramme généré par ordinateur.

13. Agencement (10) selon la revendication 12, dans lequel l'hologramme généré par ordinateur comprend au moins un élément de collimation ou de focalisation.

14. Agencement (10) selon l'une des revendications 12 ou 13, dans lequel l'hologramme généré par ordinateur est configuré pour générer les au moins deux sous-faisceaux spatiaux (15a ; 15b) ayant des intensités différentes.

15. Agencement (10) selon l'une des revendications précédentes, comprenant un émetteur thermique comme source lumineuse (18), et dans lequel la source lumineuse comprend une optique de collimation (18a).

16. Agencement (10) selon la revendication 15, dans lequel l'optique de collimation (18a) comprend un concentrateur réfléchissant disposé autour de la source lumineuse (18).

17. Agencement (10) selon l'une des revendications précédentes, dans lequel le dispositif de mesure (16) comprend une optique de focalisation (17) en amont d'une unité de récepteur (16a ; 16b).

18. Agencement (10) selon les revendications 16 et 17, dans lequel à la fois l'optique de collimation (18a) que l'optique de focalisation (17, 12b) est/sont configurée(s) comme une lentille réfractive ou une lentille diffractive ou une lentille de zone de Fresnel, ou dans lequel la lentille réfractive et la lentille diffractive comprennent du silicium ou un matériau polymère transparent aux IR.

19. Agencement (10) selon l'une des revendications 6 à 18, dans lequel le dispositif de mesure (16) comprend un ou plusieurs éléments de filtre sélectifs en longueur d'onde (19a ; 19b) en tant que filtres amont et associés (19a ; 19b), et dans lequel un élément de filtre (19a; 19b) chacun est disposé en amont d'un élément de récepteur (16a; 16b) d'une unité de récepteur de lumière.

20. Agencement (10) selon la revendication 19, dans lequel des éléments de filtre et de récepteur (19a; 19b et 16a; 16b;) sont disposés en deux groupes de longueurs d'onde ou plus qui sont séparés les unes des autres dans l'espace.

21. Procédé (20) d'analyse d'un fluide comprenant les étapes suivantes
mélanger spatialement et diviser (22) un signal optique en au moins deux sous-faisceaux spatiaux (15a ; 15b) avec un élément optique diffractif (12a) afin de mélanger spatialement le signal optique et d'obtenir une séparation de faisceaux de 1 sur n en n sous-faisceaux (15a ; 15b) pour n champs de mesure, n étant un entier naturel supérieur à 1 ;
influencer (24) les au moins deux sous-faisceaux spatiaux (15a ; 15b) ou le signal optique avec un échantillon du fluide, l'échantillon étant sensiblement complètement éclairé par chacun des au moins deux sous-faisceaux spatiaux (15a ; 15b) ; et
mesurer (26) les au moins deux sous-faisceaux spatiaux (15a ; 15b).
